# EUROPÄISCHE PATENTSCHRIFT

(11) **EP 1 715 214 B1**
(45) Veröffentlichungstag und Bekanntmachung des Hinweises auf die Patenterteilung: **27.02.2013**
(21) Anmeldenummer: 06004433.6
(22) Anmeldetag: 04.03.2006
(51) Int. Cl.: F16F 9/05

(54) **Schlauchrollbalg für pneumatische und/oder hydropneumatische Federungs- bzw. Dämpfungselemente**
Tubular rolled bellow for a pneumatic and/or hydropneumatic spring or damping element
Soufflet roulant tubulaire pour un élément pneumatique et/ou hydropneumatique de ressort ou d'amortissement

(30) Priorität: 20.04.2005 DE 102005018132
(43) Veröffentlichungstag der Anmeldung: 25.10.2006
(73) Patentinhaber: Carl Freudenberg KG, 69469 Weinheim (DE)
(72) Erfinder: Pelz, Peter, Dr., 64285 Darmstadt (DE); Weber, Michael, 21244 Buchholz (DE)

(56) Entgegenhaltungen:
- DE-B3- 10 311 263
- US-A- 2 933 308
- US-A- 5 366 048
- US-A1- 2003 151 177
- US-B1- 6 536 749

## Beschreibung

### Technisches Gebiet

Die Erfindung befasst sich mit pneumatischen und/oder hydropneumatischen Federungs- bzw. Dämpfungselementen mit einem als Schlauchrollbalg als Doppelrollbalg. Bei Elementen dieser Art werden Schlauchrollbälge für den Abschluss der die Druckmedien aufnehmenden Arbeitskammern herangezogen. Die Schlauchrollbälge lassen eine Bewegung der Teile der Federungs- bzw. Dämpfungselemente zueinander zu.

### Stand der Technik

In der DE 196 42 024 A1 ist eine Rollbalg-Gasfeder mit einem Außenstützteil gezeigt, bei der ein Gasraum zwischen zwei Abstützelementen und einer dazwischen in Umfangsrichtung geschlossenen Rollwand eingeschlossen ist. Der Rollbalg ist mit seinen Enden an den Abstützelementen befestigt und schließt den Arbeitsraum, der mit einem Gas gefüllt ist, luftdicht nach außen ab. Eine solche Gasfeder kann als Federungselement zwischen einem Rad und dem Aufbau eines Kraftfahrzeugs angeordnet werden.

Eine andere Möglichkeit zur Verwendung eines Schlauchrollbalgs ist in der EP 0 516 129 B1 gezeigt. Dort werden Rollbälge in den dort gezeigten Ausführungsbeispielen bei einer Vorrichtung zur Dämpfung von Schwingungen eingesetzt. Die Rollbälge schließen mit einem Fluid gefüllte Kammern ein, wobei die Kammern untereinander über Durchflusskanäle in Verbindung stehen. Bei einer Verschiebung der Kolben und Gehäuse zueinander findet ein Austausch der Flüssigkeiten zwischen den Kammern statt und dadurch erfolgt eine Dämpfung der aufgetretenen Schwingungen.

Des Weiteren ist in der DE 103 11 263 B3 eine Luftfeder mit einer ersten und einer zweiten Arbeitskammer mit unterschiedlichen Durchmessern und Volumina gezeigt, bei der mehrere Rollbälge eingesetzt werden. Zur Abdichtung der Kammern werden unter anderem auch Rollbälge mit zueinander entgegen gerichteten Rollfalten verwendet.

Die Möglichkeit bei einer Federungseinrichtung einen Doppelrollbalg zu verwenden zeigt die US 2 933 308 A. Der Doppelrollbalg umgibt einen Arbeitsraum, in dem ein ausgeglichener Druck herrscht. Eine solche Federungseinrichtung hat keinerlei Dämpfungsverhalten.

Bekannt ist durch die US 2003/0151177 A1 eine weitere Federungseinrichtung mit einem Doppelrollbalg mit voneinander weggerichteten Rollfalten. Seine Wirkungsweise ist wie voranstehend geschildert.

### Darstellung der Erfindung

Der Erfindung liegt die Aufgabe zugrunde, für pneumatische und / oder hydrompneumatische Federungs- bzw. Dämpfungselemente einen Schlauchrollbalg zu schaffen, der in seinem Aufbau einfach gehalten ist und der eine kostensparende Montage in einem Federungs- bzw. Dämpfungselement erlaubt. Der Schlauchrollbalg soll darüber hinaus bei einer hohen Lebensdauer auch einen hohen Abrollkomfort haben.

Die Lösung der gestellten Aufgabe wird mit den Merkmalen des Anspruchs 1 erreicht.

Der Schlauchrollbalg wird als Doppelrollbalg ausgebildet und in Form eines Mitteilteils und zwei vom Mitteilteil ausgehenden zueinander entgegen gerichteten, die Rollfalten bildenden Seitenteilen hergestellt. Während bei bisherigen Ausführungen mit zwei entgegen gerichteten Rollbälgen jeder

Rollbalg mit seinem inneren und seinem äußeren Ende am Federungs- bzw. Dämpfungselement zu befestigen war, entfällt bei dem neuen Rollbalg ein Befestigungsende. Nach der Erfindung entsteht ein Doppelrollbalg, der zwei zueinander entgegen gerichtete Rollfalten hat, so dass zum einen eine sehr einfache Ausbildung des Rollbalgs selbst und darüber hinaus eine vereinfachte Befestigung des Rollbalgs am Federungs- bzw. Dämpfungselement vorgenommen werden kann. Der Mitteilteil des Rollbalgs kann in sehr einfacher Weise über ein Rohrstück am Federungs- bzw. Dämpfungselement angebracht werden und lediglich die beiden äußeren Enden des Doppelrollbalgs sind in üblicher Weise druckmitteldicht mit dem Federungs- bzw. Dämpfungselement zu verbinden.

Die Ausbildung der Rollfalten kann dadurch unterstützt werden, dass der Mitteilteil des Doppelrollbalgs einen kleineren Durchmesser als seine Seitenteile hat. Dabei ist es weiter möglich, die Seitenteile in einen inneren und einen äußeren Abschnitt zu unterteilen, wobei der äußere Abschnitt einen größeren Durchmesser hat als der inneren Abschnitt.

Bei der Befestigung des Doppelrollbalgs im Federungs- bzw. Dämpfungselement wird bevorzugt der Mitteilteil in seiner gesamten Länge von einem Rohrstück umfasst. Dieses Rohrstück wird am Federungs- bzw. Dämpfungselement ortsfest fixiert und bildet gleichzeitig die Abrollflächen für die Rollfalten.

Des Weiteren ist es günstig, wenn die Seitenteile des Doppelrollbalgs von der Gehäusewandung des Federungs- bzw. Dämpfungselement umfasst sind. Die Enden der Seitenteile können dabei zwischen Einsatzstücken und der Gehäusewandung eingeklemmt werden.

Durch die Rollfalten des Doppelrollbalgs wird jeweils ein ein Druckmedium aufnehmender Arbeitsraum abgeschlossen, wobei die Arbeitsräume über mindestens einen Verbindungskanal miteinander kommunizieren. Dabei kann ein Strömungsverlust auftreten, der für Dämpfungszwecke genutzt werden kann. Bei geschlossenem Verbindungskanal arbeitet das Druckmedium in jedem der Arbeitsräume federnd.

In weiterer Ausgestaltung, insbesondere bei sehr hohen Drücken in den einzelnen Arbeitsräumen, wird der zwischen den Rollfalten des Doppelrollbalgs vorhandene und von dem Rohrstück und der Gehäusewandung eingefassten Raum ebenfalls mit einem Druckmedium beaufschlagt. Der Druck wird jedoch geringer gewählt, als der in den Arbeitsräumen vorhandene Druck.

### Kurzbeschreibung der Zeichnung

Anhand der in der Zeichnung dargestellten Ausführungsbeispiele wird die Erfindung nachstehend näher erläutert.

Es zeigt:
- Fig. 1: schematisch im Längsschnitt den Doppelrollbalg eingefügt in ein Federungs- bzw. Dämpfungselement,
- Fig. 2: eine konstruktive Ausführungsmöglichkeit der Fig. 1 und
- Fig. 3: das Element mit einer Druckkammer für den Zwischenraum zwischen den Rollfalten.

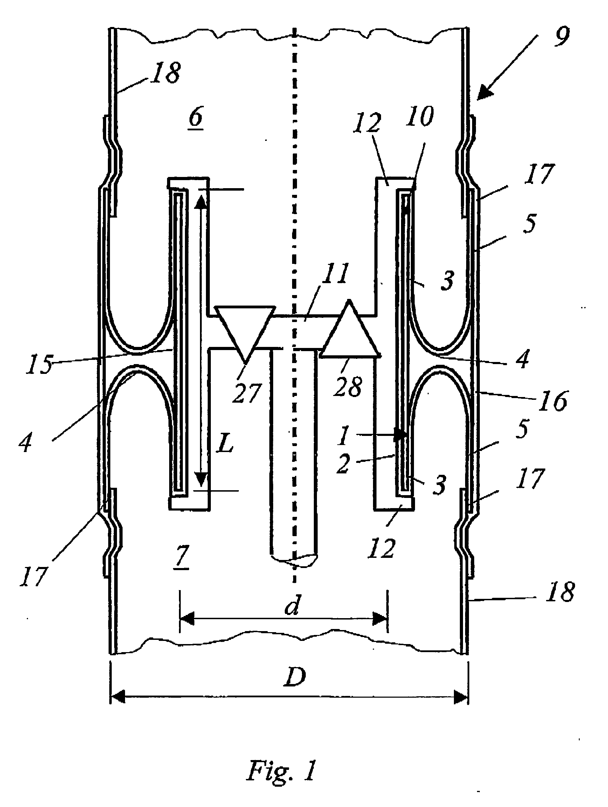

Die Fig. 1 zeigt den in ein Federungs- bzw. Dämpfungselement eingebauten Doppelrollbalg 1 im Schnitt. Der Doppelrollbalg 1 besteht aus dem Mitteilteil 2 und den daran anschließenden Seitenteilen 3, welche die entgegen gerichteten Rollfalten 4 bilden. Das Ausführungsbeispiel zeigt einen Rollbalg 1, bei dem der Mitteilteil 2 radial innerhalb der Seitenteile 3 liegt. An dieser Stelle wird darauf hingewiesen, dass auch eine radial umgekehrte Ausrichtung von Mitteilteil 2 und Seitenteilen 3 möglich ist. Die in der Fig. 1 gezeigte Ausführungsform hat jedoch den Vorteil einer noch leichteren Montage. In diesem Fall ist es des Weiteren günstig, wenn der Mitteilteil 2 mit einem kleineren Durchmesser d als dem Durchmesser D der äußeren Abschnitte 5 der Seitenteile 3 versehen ist. In vielen Fällen ist diese unterschiedliche Ausbildung der Durchmesser d und D nicht erforderlich, da die Rollfalten 4 durch den in den Kammern 6 und 7 herrschende Druck ausgedehnt werden. Dennoch hat es sich als günstig erwiesen, wenn zumindest die äußeren Abschnitte 5 einen größeren Durchmesser D als die inneren Abschnitte 8 der Seitenteile 3 haben.

Die Befestigung des Mitteilteils 2 in dem Federungs- bzw. Dämpfungselement 9, von dem nur der den Doppelrollbalg 1 einfassende Teil gezeigt ist, erfolgt durch das Rohrstück 10, welches den Mitteilteil 2 in seiner gesamten Länge L umfasst. Auf diese Weise wird der Doppelrollbalg 1 am Federungselement 9 ortsfest fixiert. Hierfür sind an dem im Federungselement 9 axial beweglichen Kolben 11 Begrenzungsflansche 12 vorgesehen. Das Rohrstück 10 stellt mit seiner Außenfläche 15 gleichzeitig die Abrollflächen für die Rollfalten 4 dar. Die Seitenteile 3 des Doppelrollbalgs 1 werden von der Gehäusewandung 16 des Federungselements 9 umfasst. Dabei liegen die äußeren Abschnitte 5 der Seitenteile 3 an dieser Gehäusewandung 16 an. Die Enden 17 der Seitenteile 3 werden zwischen den Einsatzstücken 18 und der Gehäusewandung 16 eingeklemmt. Im Beispiel sind die Seitenteile 3 symmetrisch ausgebildet. Bei Bedarf können hier auch andere Ausgestaltungen gewählt werden.Die Rollfalten 4 des Doppelrollbalgs 1 schließen jeweils einen der Arbeitsräume 6 und 7 des Federungselements 9 ab. Die mit den Ventilen 27 und 28 versehenen Verbindungskanäle 19 im Kolben 11 ermöglichen einen Austausch des Druckmediums zwischen den Arbeitsräumen 6 und 7.

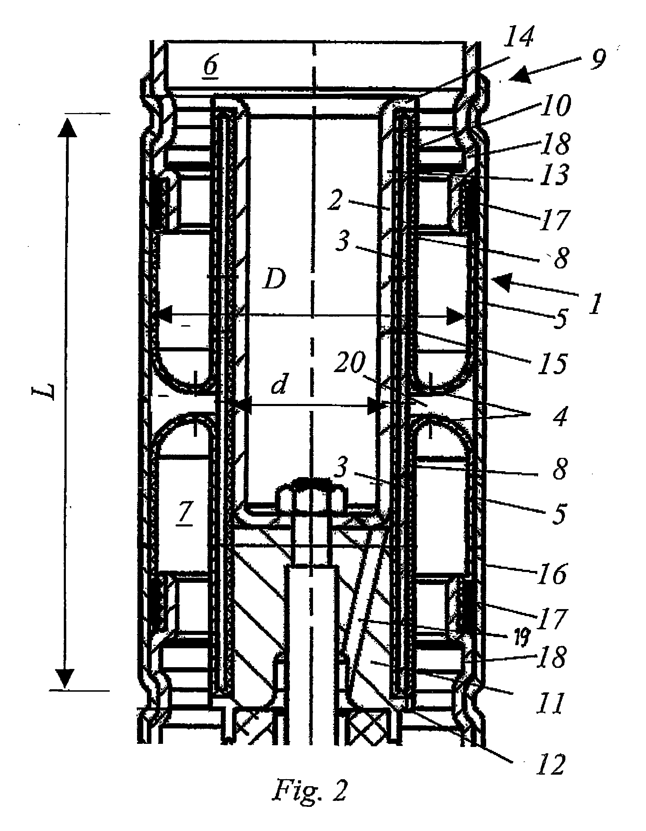

Die Fig. 2 zeigt eine konstruktive detailliertere Ausgestaltung des Beispiels aus der Fig. 1. Der Kolben 11 hat den Begrenzungsflansch 12 und außerdem ein Topfteil 13 mit dem Haltekragen 14. Der Topfteil 13 wird am Kolben 11 angeschraubt. Der Verbindungskanal 19 zwischen den Arbeitsräumen 6 und 7 ist hier ohne Ventil.

Um auch bei hohen Drücken einen sehr guten Abrollkomfort für die Rollfalten zu erreichen und auch um eine hohe Lebensdauer des Rollbalgs sicher zu stellen, wird der zwischen den Rollfalten 4 und dem Rohrstück 10 und der Gehäusewandung 16 eingefasste Raum 20 mit einem Druckmedium beaufschlagt. Dieses Druckmedium ist in günstiger Weise dasselbe, welches in den Arbeitsräume 6 und 7 vorhanden ist. Eine entsprechende Verbindungsleitung für das Druckmedium mit einem eingesetzten Druckminderventil kann hierfür benutzt werden.

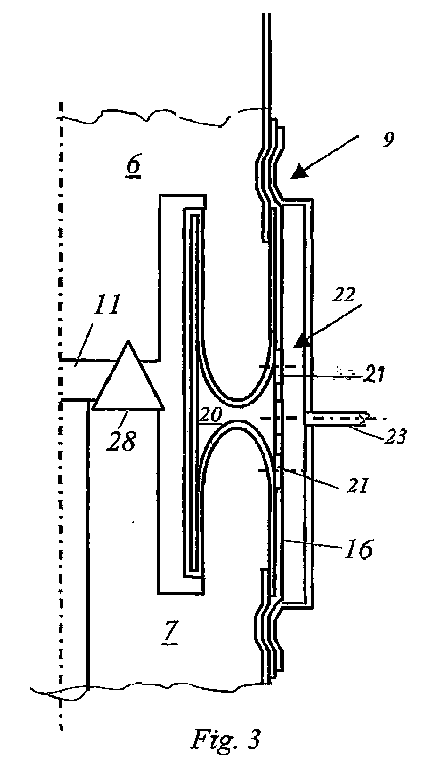

Die Fig. 3 zeigt eine Ausgestaltung des Federungs- bzw. Dämpfungselements 9, bei dem die Gehäusewandung 16 zum Raum 20 Öffnungen 21 hat und mit einer Ringkammer 22 versehen ist. Über die Zuleitung 23 wird Druckluft in die Ringkammer 22 und von dort über die Öffnungen 21 in den Raum 20 geleitet, Der Druck im Raum 20 wird so bemessen, dass er höher als der Umgebungsdruck, jedoch niedriger als der in den Arbeitsräumen 6 und 7 herrschende Druck ist.

## Patentansprüche

1. Pneumatische und / oder hydropneumatische Federungs- bzw. Dämpfungselemente mit einem Schlauchrollbalg als Doppelrollbalg, aus einem Mitteilteil und zwei vom Mitteilteil ausgehenden zueinander entgegen gerichteten, die Rollfalten des Doppelrollbalgs bildenden Seitenteilen, **dadurch gekennzeichnet, dass** die Rollfalte (4) des Doppelrollbalgs (1) jeweils einen ein Druckmedium aufnehmenden Arbeitsraum (6,7) abschließen, wobei die Arbeitsräume (6,7), durch einen im Federungselement (9) axial beweglichen Kolben (11) mit einem Begrenzungsflansch (12) voneinander getrennt sind und über mindestens einen im Kolben (11) vorhandenen Verbindungskanal (19) miteinander kommunizieren, und das Mittelteil (2) einen kleineren Durchmesser (d) als die Seitenteile (3) hat, welche innere und äußere Abschnitte (8,5) haben, wobei die äußeren Abschnitte (5) einen größeren Durchmesser (D) als die inneren Abschnitte (8) haben und beim Einsatz des Mittelteils (2) in den Begrenzungsflansch (12) des Kolbens (11) das Mittelteil (2) in seiner gesamten Länge (L) von einem die Abrollflächen für die Rollfalten (4) bildenden Rohrstück (10) umfasst ist.

2. Pneumatische und / oder hydropneumatische Federungs- bzw. Dämpfungselemente mit einem Schlauchrollbalg als Doppelrollbalgnach Anspruch 1, **dadurch gekennzeichnet, dass** das Rohrstück (10) am Federungs- bzw. Dämpfungselement (9) ortsfest fixiert ist.

3. Pneumatische und / oder hydropneumatische Federungs- bzw. Dämpfungselemente mit einem Schlauchrollbalg als Doppelrollbalg nach Anspruch 1 oder 2, **dadurch gekennzeichnet, dass** die Seitenteile (3) des Doppelrollbalgs (1) von der Gehäusewandung (16) des Federungs- bzw. Dämpfungselement (9) umfasst sind.

4. Pneumatische und / oder hydropneumatische Federungs- bzw. Dämpfungselemente mit einem Schlauchrollbalg als Doppelrollbalgnach Anspruch 3, **dadurch gekennzeichnet, dass** die Enden (17) der Seitenteile (3) zwischen Einsatzstücken (18) und der Gehäusewandung (16) eingeklemmt sind.

5. Pneumatische und / oder hydropneumatische Federungs- bzw. Dämpfungselemente mit einem Schlauchrollbalg als Doppelrollbalgnach einem der Ansprüche 1 bis 4, **dadurch gekennzeichnet, dass** der zwischen den Rollfalten (4) des Doppelrollbalgs (1) vorhandene und von dem Rohrstück (10) und der Gehäusewandung (16) eingefasste Raum (20) mit einem Druckmedium beaufschlagt ist.

6. Pneumatische und / oder hydropneumatische Federungs- bzw. Dämpfungselemente mit einem Schlauchrollbalg als Doppelrollbalgnach Anspruch 5, **dadurch gekennzeichnet, dass** der Druck des Druckmediums geringer als der Druck des Mediums in den Arbeitsräumen (6, 7) ist.

## Claims

1. Pneumatic and/or hydropneumatic spring or damping elements with a tubular rolled bellow as a double rolled bellow composed of a middle part and of two oppositely directed side parts emanating from the middle part and forming the roll folds of the double rolled bellow, **characterized in that** the roll folds (4) of the double rolled bellow (1) in each case close off a working space (6, 7) receiving pressure medium, the working spaces (6, 7) being separated from one another by a piston (11) movable axially in the spring element (9) and having a delimiting flange (12), the said working spaces communicating with one another via at least one connecting duct (19) present in the piston (11), and the middle part (2) having a smaller diameter (d) than the side parts (3) which have inner and outer portions (8, 5), the outer portions (5) having a larger diameter (D) than the inner portions (8), and, when the middle part (2) is inserted into the delimiting flange (12) of the piston (11), the middle part (2) is surrounded over its entire length (L) by a tubular piece (10) forming the rolling surfaces for the roll folds (4).

2. Pneumatic and/or hydropneumatic spring or damping elements with a tubular rolled bellow as a double rolled bellow according to Claim 1, **characterized in that** the tubular piece (10) is fixed to the spring or damping element (9) at a permanent location.

3. Pneumatic and/or hydropneumatic spring or damping elements with a tubular rolled bellow as a double rolled bellow according to Claim 1 or 2, **characterized in that** the side parts (3) of the double rolled bellow (1) are surrounded by the housing wall (16) of the spring or damping element (9).

4. Pneumatic and/or hydropneumatic spring or damping elements with a tubular rolled bellow as a double rolled bellow according to Claim 3, **characterized in that** the ends (17) of the side parts (3) are clamped between insert pieces (18) and the housing wall (16).

5. Pneumatic and/or hydropneumatic spring or damping elements with a tubular rolled bellow as a double rolled bellow according to one of Claims 1 to 4, **characterized in that** the space (20) present between the roll folds (4) of the double rolled bellow (1) and framed by the tubular piece (10) and the housing wall (16) is acted upon by a pressure medium.

6. Pneumatic and/or hydropneumatic spring or damping elements with a tubular rolled bellow as a double rolled bellow according to Claim 5, **characterized in that** the pressure of the pressure medium is lower than the pressure of the medium in the working spaces (6, 7).

## Revendications

1. Elément pneumatique et/ou hydropneumatique de suspension ou d'amortissement comprenant un soufflet roulant tubulaire sous forme de double soufflet roulant, constitué d'une partie centrale et de deux parties latérales orientées à l'opposé l'une de l'autre à partir de la partie centrale, qui forment les plis roulants du double soufflet roulant, **caractérisé en ce que** les plis roulants (4) du double soufflet roulant (1) ferment à chaque fois un espace de travail (6, 7) recevant un milieu sous pression, les espaces de travail (6, 7) étant séparés l'un de l'autre par un piston (11) déplaçable axialement dans l'élément de suspension (9) avec une bride de limitation (12) et communiquant l'un avec l'autre par le biais d'au moins un canal de liaison (19) prévu dans le piston (11), et la partie centrale (2) ayant un plus petit diamètre (d) que les parties latérales (3), qui ont des portions intérieures et extérieures (8, 5), les portions extérieures (5) ayant un plus grand diamètre (D) que les portions intérieures (8) et lors de l'insertion de la partie centrale (2) dans la bride de limitation (12) du piston (11), la partie centrale (2) étant entourée sur toute sa longueur (L) par une pièce tubulaire (10) formant les surfaces déroulantes pour les plis roulants (4).

2. Elément pneumatique et/ou hydropneumatique de suspension ou d'amortissement comprenant un soufflet roulant tubulaire sous forme de double soufflet roulant selon la revendication 1, **caractérisé en ce que** la pièce tubulaire (10) est fixée en place sur l'élément de suspension ou d'amortissement (9).

3. Elément pneumatique et/ou hydropneumatique de suspension ou d'amortissement comprenant un soufflet roulant tubulaire sous forme de double soufflet roulant selon la revendication 1 ou 2, **caractérisé en ce que** les parties latérales (3) du double soufflet roulant (1) sont entourées par la paroi de boîtier (16) de l'élément de suspension ou d'amortissement (9).

4. Elément pneumatique et/ou hydropneumatique de suspension ou d'amortissement comprenant un soufflet roulant tubulaire sous forme de double soufflet roulant selon la revendication 3, **caractérisé en ce que** les extrémités (17) des parties latérales (3) sont serrées entre des pièces d'insertion (18) et la paroi du boîtier (16).

5. Elément pneumatique et/ou hydropneumatique de suspension ou d'amortissement comprenant un soufflet roulant tubulaire sous forme de double soufflet roulant selon l'une quelconque des revendications 1 à 4, **caractérisé en ce que** l'espace (20) prévu entre les plis roulants (4) du double soufflet roulant (1) et enfermé par la pièce tubulaire (10) et la paroi du boîtier (16) est sollicité par un milieu sous pression.

6. Elément pneumatique et/ou hydropneumatique de suspension ou d'amortissement comprenant un soufflet roulant tubulaire sous forme de double soufflet roulant selon la revendication 5, **caractérisé en ce que** la pression du milieu sous pression est inférieure à la pression du milieu dans les espaces de travail (6, 7).
